# EUROPEAN PATENT APPLICATION

(11) **EP 4 645 027 A1**
(43) Date of publication of application: **05.11.2025**
(21) Application number: 23910125.6
(22) Date of filing: 13.12.2023
(51) Int. Cl.: G05D 105/10, G05D 1/622

(54) **SELF-PROPELLED DEVICE OBSTACLE AVOIDANCE METHOD AND APPARATUS BASED ON LINE LASER, AND DEVICE AND MEDIUM**

(30) Priority: 30.12.2022 CN 202211732848
(71) Applicant: Beijing Roborock Innovation Technology Co., Ltd., Beijing 102206 (CN)
(72) Inventor: WANG, Yixing, Beijing 102206 (CN); WANG, Lei, Beijing 102206 (CN); ZHANG, Lei, Beijing 102206 (CN)
(74) Representative: Winter, Brandl - Partnerschaft mbB
(86) International application number: PCT/CN2023/138314
(87) International publication number: WO 2024/140195

(57) **Abstract**

A self-propelled device obstacle avoidance method and apparatus based on line laser, and a device and a medium. The method comprises: acquiring a line laser recognition image of a self-propelled device (S301); determining whether there is a wire-type obstacle according to the line laser recognition image, so as to obtain a line laser recognition result (S302); and executing a corresponding obstacle avoidance action according to the line laser recognition result (S303).

## Description

The present disclosure claims priority to Patent Application No. CN 202211732848.4, filed on December 30, 2022 and entitled "OBSTACLE AVOIDANCE METHOD AND APPARATUS FOR SELF-PROPELLED DEVICE BASED ON LINE LASER, DEVICE, AND MEDIUM".

### TECHNICAL FIELD

The present disclosure relates to the field of cleaning robot control technologies, and in particular, to an obstacle avoidance method and apparatus for a self-propelled device based on a line laser, a device, and a medium.

### BACKGROUND

Common obstacles in a home environment, such as shoes, socks, weight scales, and fans, are all obstacles with fixed forms and sizes. For these obstacles, most of obstacle avoidance requirements can be met by using a general recognition method combined with a line laser method. That is, the type and more accurate position information of an obstacle can be obtained by combining the type and position information of the obstacle obtained by image recognition and the position information of the obstacle obtained by line laser ranging.

However, for a loose wire that is expanded, the posture of the wire is not fixed, and the wire will occupy a relatively large space after semi-expansion/expansion, which may not be completely observed from the perspective of the robot. For a wire that cannot be completely observed, especially when the posture is not fixed, there is a higher possibility of a blind zone, and when the robot travels to the vicinity of the blind zone, the risk of interference to the operation of the robot will be increased. Secondly, for a thinner wire, due to its low height, the accuracy of the original line laser ranging solution cannot meet the requirements of ranging based on a change in the height of the obstacle.

It should be noted that the information disclosed in the above background section is only configured for enhancement of understanding of the background of the present disclosure and therefore may include information that does not constitute the prior art known to those of ordinary skill in the art.

### SUMMARY

An object of the present disclosure is to provide an obstacle avoidance method and apparatus for a self-propelled device, a self-propelled device, and a computer-readable storage medium, which are configured to implement accurate recognition of a wire-type obstacle.

According to a first aspect of the present disclosure, an obstacle avoidance method for a self-propelled device based on a line laser is provided. The method includes:
acquiring a line laser recognition image of the self-propelled device;
determining whether a wire-type obstacle exists based on the line laser recognition image, to obtain a line laser recognition result; and
performing a corresponding obstacle avoidance action based on the line laser recognition result.

In an exemplary embodiment of the present disclosure, the determining whether a wire-type obstacle exists based on the line laser recognition image, to obtain a line laser recognition result includes:
analyzing the line laser recognition image to determine whether a laser breakpoint exists in each line laser in the line laser recognition image;
determining that the wire-type obstacle exists when the laser breakpoint exists; and
determining that the wire-type obstacle does not exist when the laser breakpoint does not exist.

In an exemplary embodiment of the present disclosure, the method further includes:
acquiring an image recognition result; and
performing, in response to both the image recognition result and the line laser recognition result indicating the existence of the wire-type obstacle, the corresponding obstacle avoidance action based on the image recognition result and the line laser recognition result.

In an exemplary embodiment of the present disclosure, the performing the corresponding obstacle avoidance action based on the image recognition result and the line laser recognition result includes:
acquiring a first accuracy of historical image recognition results and a second accuracy of historical line laser recognition results, separately;
determining a first weight corresponding to the image recognition result based on the first accuracy, and determining a second weight corresponding to the line laser recognition result based on the second accuracy;
determining a comprehensive recognition result based on the image recognition result, the first weight, the line laser recognition, and the second weight; and
performing the corresponding obstacle avoidance action on the wire-type obstacle based on the comprehensive recognition result.

In an exemplary embodiment of the present disclosure, the method further includes:
acquiring, in response to the image recognition result indicating the existence of the wire-type obstacle and the line laser recognition result indicating the inexistence of the wire-type obstacle, or in response to the image recognition result indicating the inexistence of the wire-type obstacle and the line laser recognition result indicating the existence of the wire-type obstacle, a plurality of image recognition results and a plurality of line laser recognition results; and
re-determining whether the wire-type obstacle exists based on the plurality of image recognition results acquired and the plurality of line laser recognition results acquired.

In an exemplary embodiment of the present disclosure, the image recognition result includes a position box corresponding to the obstacle, and the method further includes:
determining first position coordinate information of the wire-type obstacle based on coordinates of each laser breakpoint in the line laser recognition image;
performing semantic segmentation on the image recognition result, to determine whether each pixel point in the position box corresponding to the wire-type obstacle belongs to the wire-type obstacle;
marking the pixel point when the pixel point belongs to the wire-type obstacle, to determine second position coordinate information of the wire-type obstacle;
determining final position coordinate information based on the first position coordinate information and the second position coordinate information; and
performing the corresponding obstacle avoidance action based on the final position coordinate information.

In an exemplary embodiment of the present disclosure, the method further includes:
determining a starting/ending point of the wire-type obstacle; and
performing a first obstacle avoidance action on a first region where the starting/ending point of the wire-type obstacle is located, and performing a second obstacle avoidance action on a second region except the first region, where an avoidance distance of the first obstacle avoidance action is greater than an obstacle avoidance distance of the second obstacle avoidance action.

In an exemplary embodiment of the present disclosure, the determining a starting/ending point of the wire-type obstacle includes:
performing recognition on the image recognition result by using a target image recognition algorithm to determine the starting/ending point of the wire-type obstacle.

In an exemplary embodiment of the present disclosure, the determining a starting/ending point of the wire-type obstacle includes:
determining an endpoint position of the wire-type obstacle based on the first position coordinate information of the wire-type obstacle; and
determining the endpoint position as the starting/ending point of the wire-type obstacle.

In an exemplary embodiment of the present disclosure, the determining a starting/ending point of the wire-type obstacle includes:
acquiring the plurality of line laser recognition results of the self-propelled device, and determining all corresponding pixel points within a range of the wire-type obstacle based on the plurality of line laser recognition results;
performing clustering processing on all the pixel points to determine a pixel point breakpoint within the range of the wire-type obstacle; and
determining the pixel point breakpoint as the starting/ending point of the wire-type obstacle.

According to a second aspect of the present disclosure, an obstacle avoidance apparatus for a self-propelled device based on a line laser is provided. The apparatus includes:
an acquiring unit, configured to acquire a line laser recognition image of the self-propelled device;
a result determining unit, configured to determine whether a wire-type obstacle exists based on the line laser recognition image, to obtain a line laser recognition result; and
a processing unit, configured to perform a corresponding obstacle avoidance action based on the line laser recognition result.

According to a third aspect of the present disclosure, a computer-readable medium having a computer program stored thereon is provided. The program, when executed by a processor, implements the obstacle avoidance method for a self-propelled device based on a line laser according to the first aspect in the above embodiments.

According to a fourth aspect of the present disclosure, an electronic device is provided. The electronic device includes: one or more processors; and a storage apparatus configured to store one or more programs which, when executed by the one or more processors, cause the one or more processors to implement the obstacle avoidance method for a self-propelled device based on a line laser according to the first aspect in the above embodiments.

The present disclosure provides an obstacle avoidance method and apparatus for a self-propelled device based on a line laser. The method includes: acquiring a line laser recognition image of the self-propelled device; determining whether a wire-type obstacle exists based on the line laser recognition image, to obtain a line laser recognition result; and performing a corresponding obstacle avoidance action based on the line laser recognition result. With the technical solutions of the present disclosure, the existence of the wire-type obstacle can be recognized through image recognition and line laser recognition. On the basis of image recognition, the coordinates of the wire-type obstacle are further recognized through pixel marking, so as to obtain a more accurate wire range. Meanwhile, the coordinates of the wire-type obstacle are determined based on the laser breakpoint of the line laser. The avoidance action can be performed based on recognition on the image recognition result and the line laser recognition result, thereby improving the accuracy of wire range determination and the avoidance action.

It should be understood that, both the foregoing general description and the following detailed description are exemplary and explanatory only and are not construed as limiting the present disclosure.

### BRIEF DESCRIPTION OF THE DRAWINGS

The accompanying drawings, which are incorporated into and constitute a part of the description, illustrate embodiments consistent with the present disclosure and, together with the description, are configured to explain the principles of the present disclosure. Apparently, the drawings in the following description illustrate merely some embodiments of the present disclosure, and those of ordinary skill in the art may still derive other drawings from these drawings without creative efforts.
FIG. 1 is a schematic structural diagram of a self-propelled device according to an exemplary method.
FIG. 2 is a schematic structural diagram of a line laser module in a self-propelled device according to an exemplary method.
FIG. 3 is a flowchart of an obstacle avoidance method for a self-propelled device based on a line laser according to an exemplary embodiment.
FIG. 4 is a schematic diagram of a line laser image acquired by a self-propelled device according to an exemplary embodiment.
FIG. 5 is a schematic diagram of a line laser image acquired by another self-propelled device according to an exemplary embodiment.
FIG. 6 is a schematic diagram of a line laser image acquired by yet another self-propelled device according to an exemplary embodiment.
FIG. 7 is a schematic diagram of an image recognition structure according to an exemplary embodiment.
FIG. 8 is a schematic diagram of another image recognition structure according to an exemplary embodiment.
FIG. 9 is a block diagram of an obstacle avoidance apparatus for a self-propelled device based on a line laser according to an exemplary embodiment.

### DETAILED DESCRIPTION

Exemplary embodiments will now be described more comprehensively with reference to the drawings. However, the exemplary embodiments may be implemented in various forms, and should not be understood as being limited to the examples described herein. On the contrary, these embodiments are provided to make the present disclosure more comprehensive and complete, and comprehensively convey the idea of the exemplary embodiments to a person skilled in the art. The described features, structures, or characteristics may be combined in one or more embodiments in any suitable manner. In the following description, many specific details are provided to give a full understanding of the embodiments of the present disclosure. However, those skilled in the art will appreciate that the technical solutions of the present disclosure may be practiced without one or more of the specific details, or other methods, components, apparatuses, steps, etc., may be employed. In other instances, well-known technical solutions are not shown or described in detail to avoid obscuring aspects of the present disclosure.

In addition, the drawings are only schematic illustrations of the present disclosure and are not necessarily drawn to scale. The same reference numerals in the drawings denote the same or similar parts, and thus repeated description thereof will be omitted. Some of the block diagrams shown in the drawings are functional entities, which are not necessarily required to correspond to physically or logically independent entities. These functional entities may be implemented in the form of software, or in one or more hardware modules or integrated circuits, or across different networks and/or processor apparatuses and/or microcontroller apparatuses.

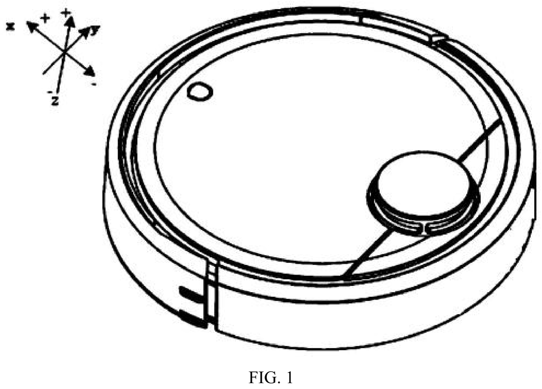

An embodiment of the present disclosure provides a possible application scenario, which includes a self-propelled device 100, such as a sweeping robot, a mopping robot, a vacuum cleaner, and a weeder. In some embodiments. In this embodiment, as shown in FIG. 1, a household sweeping robot is used as an example for description. During the operation of the sweeping robot, the sweeping robot may perform cleaning according to a preset route or an automatically planned route, but may inevitably get stuck in some places, such as a chair or a table, and cannot continue cleaning. In this case, the sweeping robot may recognize the obstacle through a cloud server, a local server, or its own storage system, and mark the position as an obstacle position, which will be automatically avoided when the sweeping robot travels to the position next time. In this embodiment, the robot may be provided with a touch-sensitive display or controlled by a mobile terminal to receive an operation instruction input by a user. The self-propelled device may be provided with various sensors, such as a buffer, a cliff sensor, an ultrasonic sensor, an infrared sensor, a magnetometer, an accelerometer, a gyroscope, an odometer, and other sensing apparatuses (the specific structure of each sensor is not described in detail, and any one of the above sensors may be configured as the self-propelled device). The robot may be further provided with a wireless communication module, such as a WIFI module and a Bluetooth module, so as to be connected to a smart terminal or a server, and receive, through the wireless communication module, an operation instruction transmitted from the smart terminal or the server.

An optional embodiment of the present disclosure provides a line laser module, and another optional embodiment of the present disclosure provides a self-mobile device. The line laser module should be configured into the self-mobile device. Specifically, the self-mobile device is a smart cleaning device, such as a sweeping robot, a mopping robot, a ground polishing robot, or a weeding robot. For convenience of description, in this embodiment, the technical solutions of the present disclosure are described by using the sweeping robot as an example.

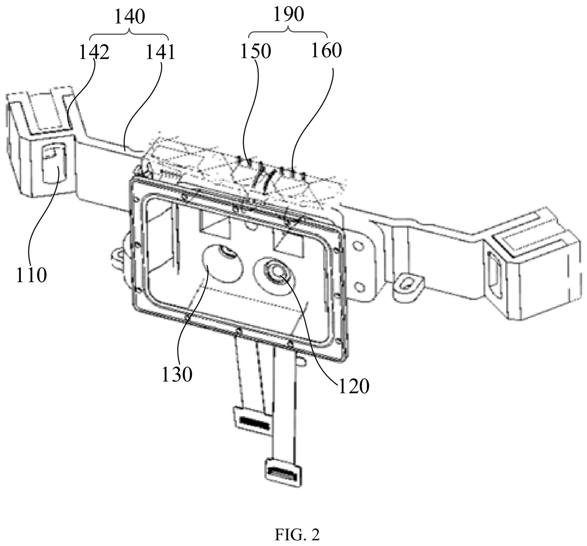

As shown in FIG. 2, in an optional embodiment of the present disclosure, the self-mobile device may include: a device main body, a sensing system, a control system, a driving system, a cleaning system, a power system, a human-machine interaction system, and the like. The systems coordinate with each other, such that the self-mobile device can move autonomously to implement the cleaning function. In the self-mobile device, the functional elements and the like constituting the systems described above are integrally arranged in the device main body.

The device main body has an approximately circular shape (both front and rear are circular), or may have another shape, including but not limited to an approximate D-shape with a square front and a circular rear. The sensing system includes a line laser module located above or lateral to the device main body. A main control unit of the control system is connected to the line laser module, and performs function control on the self-mobile device according to a sensing result of the line laser module.

In the embodiment provided by the present disclosure, the specific position of the line laser module on the device main body is not limited. For example, the position may be at, without limitation, the front side, the rear side, the left side, the right side, the top, the middle, the bottom, or the like of the device main body. Further, the line laser module is arranged at a middle position, a top position, or a bottom position in the height direction of the device main body.

In some implementable embodiments provided by the present disclosure, the self-mobile device moves forward to perform a job task. In order to better detect the environmental information in front, the line laser module is arranged at the front side of the device main body, where the front side is a side towards which the device main body faces during the forward movement of the self-mobile device.

As shown in FIG. 2, the line laser module includes: a main body portion 140 and a first image capturing assembly. The first image capturing assembly includes a first camera 120, at least a pair of line laser emission apparatuses 110, and a first image processing module that are provided on the main body portion 140. The pair of line laser emission apparatuses 110 are located at two sides of the first camera 120 and configured to emit line lasers with linear projections. The first camera 120 and the line laser emission apparatuses 110 work in cooperation with each other and are configured to collect a first environmental image. The first image processing module may acquire obstacle distance information based on the first environmental image. The line laser emission apparatuses 110 are movably connected to the main body portion 140, and/or the main body portion 140 is of a movable structure, such that the azimuth angle and the rotation angle of the line laser emission apparatuses 110 are adjustable.

In the line laser module provided in the embodiment of the present disclosure, the first camera 120 and the line laser emission apparatuses 110 cooperate with each other to recognize an obstacle or the terrain in front of the device main body, so as to perform a corresponding obstacle avoidance operation or cleaning operation. The line laser emission apparatuses 110 are movably connected to the main body portion 140, and/or the main body portion 140 is of a movable structure, such that the azimuth angle and the rotation angle of the line laser emission apparatuses 110 can be adjusted by adjusting the positions of the line laser emission apparatuses 110 relative to the main body portion 140 and/or adjusting the relative positions of the components of the main body portion 140. Therefore, when the line laser emission apparatuses 110 are assembled to the main body portion 140, the irradiation angle and the irradiation range of the line laser emitted by the line laser emission apparatuses 110 can be conveniently adjusted, so as to quickly and conveniently implement self-calibration of the line laser emission apparatuses 110 and the calibration in cooperation with the first camera 120, which is simple and easy to operate and is conducive to improving the assembly efficiency.

Further, by reasonably adjusting the azimuth angle of the line laser emission apparatuses 110, the line laser can be located within the angle of field of view of the first camera 120, so as to ensure that the first camera 120 can accurately and comprehensively capture the light reflected by the obstacle that is emitted from the line laser emission apparatuses 110, thereby improving the accuracy and comprehensiveness of the first camera 120 in acquiring the environmental image. It can be understood that the azimuth angle is adjusted for each of the line laser emission apparatuses 110 on two sides of the first camera 120, and then the line lasers on two sides are fixed by dispensing. By reasonably adjusting the rotation angle of the line laser emission apparatuses 110, the line laser is perpendicular to the horizontal plane, which is conducive to improving the ranging range.

Specifically, in one aspect, the line laser emission apparatuses 110 are movably connected to the main body portion 140, such that the azimuth angle and the rotation angle of the line laser emission apparatuses 110 can be adjusted by adjusting the positions of the line laser emission apparatuses 110 relative to the main body portion 140. In another aspect, the main body portion 140 is of a movable structure, such that the azimuth angle and the rotation angle of the line laser emission apparatuses 110 can be adjusted by adjusting the relative positions of the components of the main body portion 140. In yet another aspect, the line laser emission apparatuses 110 are movably connected to the main body portion 140, and the main body portion 140 is of a movable structure, such that the azimuth angle and the rotation angle of the line laser emission apparatuses 110 can be adjusted by adjusting the positions of the line laser emission apparatuses 110 relative to the main body portion 140 and adjusting the relative positions of the components of the main body portion 140. The embodiments provided in the present disclosure adjust the azimuth angle and the rotation angle of the line laser emission apparatuses 110 in different ways, which can meet the requirements of different connection manners for different structures of the main body portion 140 and between the line laser emission apparatuses 110 and the main body portion 140.

Further, the line laser emission apparatuses 110 are configured to emit line lasers with linear projections. For example, the line laser emission apparatuses 110 emit a laser plane to the outside, and after the laser plane reaches the obstacle, a line laser is formed on the surface of the obstacle, and the environmental image is detected by the line laser. It can be understood that a wave mirror may be further arranged in the emission direction (e.g., front) of the line laser emission apparatuses 110. Specifically, the wave mirror is a concave lens, for example, a concave lens arranged in front of the laser tube. The laser tube emits light (e.g., infrared light) of a specific wavelength, which becomes divergent light after passing through the concave lens, thereby forming a straight line on a plane perpendicular to the optical path.

The line laser emission apparatuses 110 are distributed on two sides of the first camera 120, and the first camera 120 and the line laser emission apparatuses 110 work in cooperation with each other. That is, the first environmental image collected by the first camera 120 includes a reflected light of the line laser emitted from the line laser emission apparatuses 110 and reflected by the obstacle. The obstacle distance information may be acquired based on the first environmental image, and the distance between the obstacle and the device main body or the line laser module may also be measured, so as to perform a corresponding obstacle avoidance operation.

The control system is arranged on a main circuit board in the machine body, and includes a computing processor, such as a central processing unit or an application processor, that communicates with a non-transitory memory, such as a hard disk, a flash memory, or a random access memory. The application processor draws a real-time map of an environment in which the robot is located by using a positioning algorithm, such as simultaneous localization and mapping (SLAM) based on the obstacle information fed back by the laser ranging apparatus. In addition, with reference to distance information and speed information that are fed back by sensing apparatuses such as the sensor provided on the buffer, the cliff sensor, the magnetometer, the accelerometer, the gyroscope, and the odometer, the current working state and position of the sweeping robot can be comprehensively determined, as well as the current pose of the sweeping robot, such as crossing a doorsill, getting onto a carpet, being located at a cliff, being stuck from above or below, having a full dust box, or being picked up. In addition, a specific strategy for a next action is given for different cases, such that the robot works more in line with a requirement of an owner and achieves better user experience.

The driving system may steer the robot to run across the ground based on driving commands with distance and angle information (e.g., x, y, and θ components). The driving system includes a driving wheel module, and the driving wheel module may simultaneously control a left wheel and a right wheel. In order to control the movement of the machine more accurately, the driving wheel module preferably includes a left driving wheel module and a right driving wheel module, separately. The left and right driving wheel modules are opposed along a lateral axis defined by the main body. In order for the robot to move more stably on the ground or have a stronger movement ability, the robot may include one or more driven wheels, including but not limited to universal wheels. The driving wheel module includes a traveling wheel, a drive motor, and a control circuit for controlling the drive motor. The driving wheel module may be further connected to a circuit for measuring a drive current and an odometer. The driving wheel module may be detachably connected to the main body to facilitate disassembly and maintenance. The driving wheel may be provided with a biased drop suspension system that is movably secured, e.g., rotatably attached, to the robot body and receives a spring bias that is biased downward and away from the robot body. The spring bias allows the driving wheel to maintain contact and traction with the ground with certain ground grip, while a cleaning element of the self-propelled device 100 also contacts the ground with a certain pressure.

The cleaning system may be a dry cleaning system and/or a wet cleaning system. In the dry cleaning system, the main cleaning function is derived from a cleaning system composed of a roller brush, a dust box, a fan, an air outlet, and connecting components among them. The roller brush with certain interference with the ground sweeps up garbage on the ground and rolls up the garbage to the front of a dust suction port between the roller brush and the dust box, and then the garbage is sucked into the dust box by the suction gas generated by the fan and passing through the dust box. The dry cleaning system may further include a side brush 152 with a rotation shaft that is angled relative to the ground to be configured to move debris into the roller brush region of the cleaning system.

The power system includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The host is charged by connecting to the charging pile through the charging electrodes disposed on the side or bottom of the body. If dust is attached to the exposed charging electrode, the plastic body around the electrode will melt and deform due to the accumulation effect of charge during charging, and even the electrode itself may deform, such that normal charging cannot be continued.

The human-machine interaction system includes a button on a host panel for a user to select a function, and may further include a display screen and/or an indicator light and/or a speaker, where the display screen, the indicator light, and the speaker show a current state of the machine or function options to the user, and may further include a mobile phone client program. For a path navigation type self-propelled device, a mobile phone client may show a map of an environment where the device is located and a location of the machine to the user, providing the user with richer and more user-friendly function options.

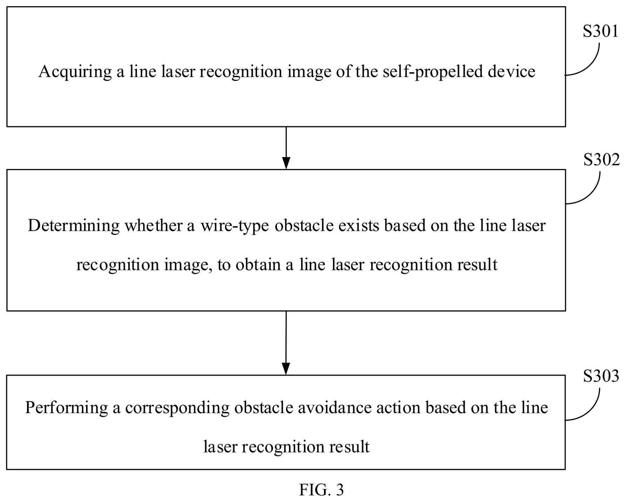

FIG. 3 is a flowchart of an obstacle avoidance method for a self-propelled device based on a line laser according to an exemplary embodiment.

As shown in FIG. 3, the obstacle avoidance method for a self-propelled device based on a line laser includes the following steps.

In step S301, a line laser recognition image of the self-propelled device is acquired.

The line laser recognition image can be obtained by irradiating the ground with the line laser.

In step S302, whether a wire-type obstacle exists is determined based on the line laser recognition image, to obtain a line laser recognition result.

In an embodiment, preferably, step S302 includes:
analyzing the line laser recognition image to determine whether a laser breakpoint exists in each line laser in the line laser recognition image;
determining that the wire-type obstacle exists when the laser breakpoint exists; and
determining that the wire-type obstacle does not exist when the laser breakpoint does not exist.

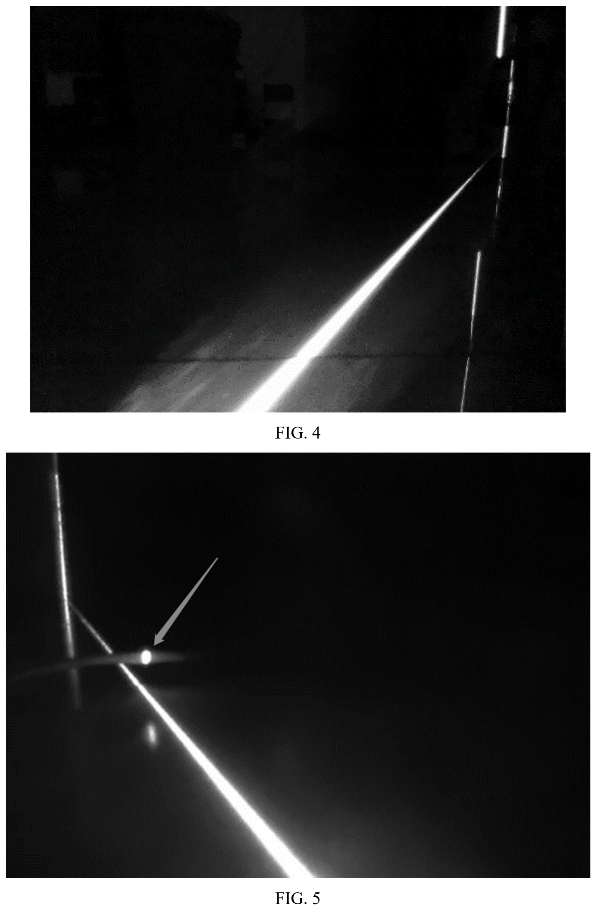

In the obstacle avoidance distance range concerned by the self-propelled device, when no obstacle exists, the line laser irradiates the ground, and in this case, a consecutive set of ranging data of the horizontal height (i.e., the height is 0) is acquired, such as the ground light in FIG. 4. Although the light is shot onto the wall and rises in the distance, it is not within the obstacle avoidance distance range concerned by the self-propelled device.

When a wire (a wire of a non-light-absorbing color or material) appears in the working range of the line laser, a part of light that should have been irradiated on the ground is blocked by the wire body, and in this case, a small number of outlier ranging points of a certain height can be observed from the ranging data. As shown in FIG. 5, the arrow indicates an outlier ranging point of a certain height, which is caused by the light being irradiated on the wire. Meanwhile, since the light is blocked by the wire body, a light breakpoint is formed at the point.

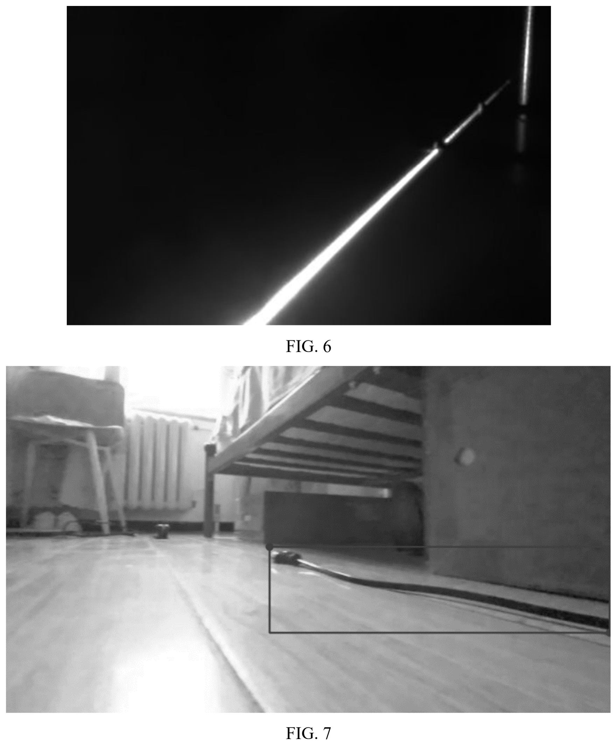

As shown in FIG. 6, for some wires of light-absorbing materials such as a black wire, the irradiated light cannot be observed on the wire body, and in this case, the ranging data is characterized in that the consecutive ranging data of the horizontal height is cut off.

In this way, the distance of the wire can be determined by using the outlier ranging points or by using the characteristic that the line laser meets the wire along the ground and is cut off, so as to obtain the position of the wire, thereby realizing both the recognition of the wire and the acquisition of the position information of the wire. Preferably, the determination is performed based on the cut-off characteristic, i.e., based on the laser breakpoint, which achieves a better effect.

In some embodiments, in order to improve the determination accuracy, a comprehensive determination may be performed based on a plurality of laser breakpoints existing in a number of/plurality of line laser recognition results. When the plurality of laser breakpoints existing in the number of/plurality of initial line laser recognition results form a consecutive laser fracture of a length greater than a preset length, it is determined that a wire-type obstacle exists in these line laser recognition results.

In step S303, a corresponding obstacle avoidance action is performed based on the line laser recognition result.

In this embodiment, whether the wire-type obstacle exists can be determined by determining whether the laser breakpoint exists in the line laser recognition image. If the wire-type obstacle exists, the corresponding obstacle avoidance action is performed, and if the wire-type obstacle does not exist, the self-propelled device walks normally without an avoidance operation.

In an embodiment, preferably, the method further includes:
acquiring an image recognition result; and
performing, in response to both the image recognition result and the line laser recognition result indicating the existence of the wire-type obstacle, the corresponding obstacle avoidance action based on the image recognition result and the line laser recognition result.

In this embodiment, the image recognition result may be further acquired, and whether the wire-type obstacle exists is determined based on the image recognition result. The wire-type obstacle may be separately recognized based on the image recognition result.

However, due to the possibility of misjudgment in image recognition and the possibility of over-fitting of the line laser ranging characteristics (that is, in the case that some ground materials absorb light/reflect light, for example, when the determination is performed by looking for a breakpoint, it may be mistakenly determined that a wire may exist in such scenarios). Therefore, as the conditional basis for triggering the obstacle avoidance behavior, in order to ensure the accuracy of the result, both the image recognition result and the line laser recognition result may be applied to recognize the wire-type obstacle.

In an embodiment, preferably, the performing the corresponding obstacle avoidance action based on the image recognition result and the line laser recognition result includes:
acquiring a first accuracy of historical image recognition results and a second accuracy of historical line laser recognition results, separately;
determining a first weight corresponding to the image recognition result based on the first accuracy, and determining a second weight corresponding to the line laser recognition result based on the second accuracy;
determining a comprehensive recognition result based on the image recognition result, the first weight, the line laser recognition, and the second weight; and
performing the corresponding obstacle avoidance action on the wire-type obstacle based on the comprehensive recognition result.

In this embodiment, the weights of the image recognition result and the line laser recognition result may be determined based on their accuracies. For example, a recognition method with frequent misjudgment and a low accuracy is given a lower weight, and a recognition method with a high accuracy is given a higher weight, thereby ensuring a higher accuracy of the recognition result.

In addition, when the existence of the wire-type obstacle cannot be determined based on the image recognition result and the line laser recognition result that are collected once, a plurality of recognition results need to be collected for recognition verification for each recognition method.

For the recognition method with a high recognition accuracy, the number of times of recognition can be reduced to draw a conclusion that the wire exists; and for the recognition method with a low recognition accuracy, the number of times of recognition needs to be increased to draw a conclusion that the wire exists, and then a joint determination is performed based on the two conclusions. Alternatively, when the recognition accuracy of one method is sufficiently high, it is possible to mainly rely on this method and use the other method as a simple aid or ignore the other method. For example, in the case of low miss rate and misjudgment rate of image recognition results, only a few ranging characteristics are needed to determine the existence of the wire, while in the case of high recognition misjudgment rate, more ranging characteristics are needed to determine the existence of the wire.

Preferably, in response to the image recognition result indicating the existence of the wire-type obstacle and the line laser recognition result indicating the inexistence of the wire-type obstacle, or in response to the image recognition result indicating the inexistence of the wire-type obstacle and the line laser recognition result indicating the existence of the wire-type obstacle, a plurality of image recognition results and a plurality of line laser recognition results are acquired; and whether the wire-type obstacle exists is re-determined based on the plurality of image recognition results acquired and the plurality of line laser recognition results acquired.

If only the image recognition result or only the line laser recognition result indicates the existence of the wire-type obstacle in a certain range, a plurality of image recognition results or a plurality of line laser recognition results are required. A probability graph scheme is used for the plurality of recognition results, that is, the probability of an obstacle at a position is constantly adjusted based on the plurality of recognition results, instead of being directly determined based on one recognition result. When the obstacle is recognized once, the probability of the obstacle existing in the corresponding range is increased, and when no recognition result of the target object exists in a frame, the probability of the obstacle existing in the viewing angle range of the robot is reduced. In this way, after a plurality of times of recognition, a probability distribution of the existence of the obstacle in each region is formed, and then the final determination is performed based on a preset probability threshold requirement, and based on this, the self-propelled device is enabled to perform the corresponding obstacle avoidance behavior or a disregarding behavior.

In this way, by detecting the above characteristics for each frame of ranging data, it is possible to determine which parts within the entire known map range may have the ranging characteristics caused by the loose wire, so as to learn an approximate distribution position of the loose wire.

It should be noted that it is possible to determine the existence of the wire-type obstacle at a position based on the line laser recognition result for a single position, and then repeat the process by continuously turning or walking, so as to finally acquire the distribution positions of all wire-type obstacles in the environment. It is also possible to acquire current distribution positions of all obstacles in the environment based on repeatedly using one type of recognition result, and then acquire current distribution positions of all obstacles in the environment based on repeatedly using another type of recognition result, and finally comprehensively consider the two types of recognition results to obtain the final distribution position.

In an embodiment, preferably, the image recognition result includes a position box corresponding to the obstacle, and the method further includes:
determining first position coordinate information of the wire-type obstacle based on coordinates of each laser breakpoint in the line laser recognition image; and
performing semantic segmentation on the image recognition result, to determine whether each pixel point in the position box corresponding to the wire-type obstacle belongs to the wire-type obstacle.

As shown in FIG. 7, in the image recognition result, for the target object, a minimum rectangle in the horizontal and vertical directions is provided to determine the object range. However, for an obstacle such as a wire that is long and narrow and may have an irregular shape, only a small part is effective in the image and most parts in the image are relatively safe regions that do not require obstacle avoidance.

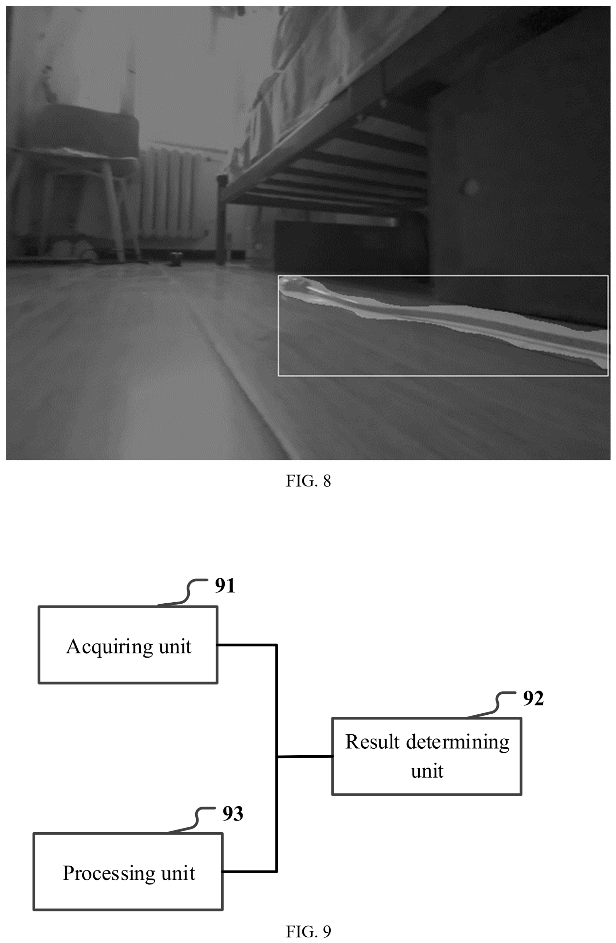

However, in the present disclosure, on the basis of the recognized object range box, each pixel within the range of the recognition box is marked as belonging to the target object or not, as shown in FIG. 8. With such processing, the recognition result can not only provide a standard square image as in the past, but also provide an obstacle region of a more specific shape, which is conducive to obtaining the specific position coordinates of each part of the wire. In this way, the accuracy of the position information of the wire is improved in terms of image recognition.

The pixel point is marked when the pixel point belongs to the wire-type obstacle, to determine second position coordinate information of the wire-type obstacle.

Final position coordinate information is determined based on the first position coordinate information and the second position coordinate information.

In this embodiment, a union set of the first position coordinate information and the second position coordinate information can be obtained, and the union set can be determined as the final position coordinate information.

The corresponding obstacle avoidance action is performed based on the final position coordinate information.

Considering that it is more likely for the self-propelled device to draw a wire head portion at the end portion of the wire into the side brush, the roller brush rotating member, or the like, which affects subsequent operations, while the middle portion of the wire is safer, the response behavior of the robot can be better adjusted by distinguishing the two portions.

In an embodiment, preferably, the method further includes:
determining a starting/ending point of the wire-type obstacle; and
performing a first obstacle avoidance action on a first region where the starting/ending point of the wire-type obstacle is located, and performing a second obstacle avoidance action on a second region except the first region, where an avoidance distance of the first obstacle avoidance action is greater than an obstacle avoidance distance of the second obstacle avoidance action.

In this embodiment, after the starting/ending point of the wire-type obstacle is determined, where the starting/ending point is the wire head portion, obstacle avoidance may be triggered in a farther range for the wire head portion. For example, it is safer for a non-wire head portion, and the self-propelled device is allowed to approach a position up to a distance A from the wire by adopting a solution of minimizing missed scanning, and for the wire head portion, the self-propelled device is allowed to approach a position up to a distance B from the wire head by adopting a solution of preventing the wire head from being drawn in as much as possible, where B>A.

Specifically, it may be determined whether the observed part belongs to the wire head by analyzing the direction of the wire in the image. Specifically, the wire head may be determined in the following ways.

In an embodiment, preferably, the determining a starting/ending point of the wire-type obstacle includes:
performing recognition on the image recognition result by using a target image recognition algorithm to determine the starting/ending point of the wire-type obstacle.

In this embodiment, the wire head may be directly used as an object type for training and recognition, so as to recognize a specific range of the wire head.

In an embodiment, preferably, the determining a starting/ending point of the wire-type obstacle includes:
determining an endpoint position of the wire-type obstacle based on the first position coordinate information of the wire-type obstacle; and
determining the endpoint position as the starting/ending point of the wire-type obstacle.

In this embodiment, after the entire wire is recognized from the image, the specific wire range, i.e., the first position coordinate information of the wire-type obstacle, is obtained through semantic segmentation. Then, by tracking all pixel points belonging to the wire-type obstacle, it can be determined where the endpoints of its continuity are located. For example, as shown in FIG. 8, it can be determined that within the range of the box, the endpoints of the wire are in the upper left corner and the lower right corner. In this case, these endpoints can be considered as the positions of the wire heads. When it is determined that the endpoint in the upper left corner is a wire head, the obstacle avoidance distance can be increased for this range of the wire head. For the lower right corner, although the endpoint is not a real wire head, the part outside the viewing angle belongs to a current blind zone, and there is a risk of getting stuck by mistake, so the obstacle avoidance distance can also be increased for this range. In addition, a special strategy may be further configured for the false wire head. That is, it may be difficult to know the authenticity of a wire head located at an edge portion of the entire image, and therefore, when the self-propelled device travels to the vicinity of such a wire head, the current behavior of the self-propelled device may be suspended, the viewing angle is changed to the direction of the unknown wire head for observation, and then after recognition and determination are performed again, the previous behavior is resumed based on an updated recognition result.

In an embodiment, preferably, the determining a starting/ending point of the wire-type obstacle includes:
acquiring the plurality of line laser recognition results of the self-propelled device, and determining all corresponding pixel points within a range of the wire-type obstacle based on the plurality of line laser recognition results;
performing clustering processing on all the pixel points to determine a pixel point breakpoint within the range of the wire-type obstacle; and
determining the pixel point breakpoint as the starting/ending point of the wire-type obstacle.

In this embodiment, all range points determined as belonging to wires are obtained by using a plurality of line laser scanning results. Through clustering, it is determined which range points belong to "a wire", and then by searching along the wire range, it can be learned where the range is broken, and the broken position can be considered as the position of the wire head.

In this way, by continuously performing steps such as image recognition and segmentation processing on the obtained image in the traveling process of the self-propelled device, in combination with the room map information established by the self-propelled device, it is possible to learn which positions have wires within the entire known map range, and further learn which positions may belong to high-risk wire head portions, and various behavior strategies may be made for different types of wire heads.

It should be noted that, based on the acquired final image recognition result and the final line laser recognition result, the information may not be limited to being configured for performing the obstacle avoidance action, as long as the information can be configured for recognizing the obstacle type and position of the wire, and the information can be configured for other purposes according to actual needs.

FIG. 9 is a block diagram of an obstacle avoidance apparatus for a self-propelled device based on a line laser according to an exemplary embodiment.

As shown in FIG. 9, according to a second aspect of the embodiments of the present disclosure, an obstacle avoidance apparatus for a self-propelled device based on a line laser is provided. The apparatus includes:
an acquiring unit 91, configured to acquire a line laser recognition image of the self-propelled device;
a result determining unit 92, configured to determine whether a wire-type obstacle exists based on the line laser recognition image, to obtain a line laser recognition result; and
a processing unit 93, configured to perform a corresponding obstacle avoidance action based on the line laser recognition result.

In an embodiment, preferably, the result determining unit is configured to:
analyze the line laser recognition image to determine whether a laser breakpoint exists in each line laser in the line laser recognition image;
determine that the wire-type obstacle exists when the laser breakpoint exists; and
determine that the wire-type obstacle does not exist when the laser breakpoint does not exist.

In an embodiment, preferably, the apparatus further includes:
a result acquiring unit, configured to acquire an image recognition result;
where the processing unit is configured to: perform, in response to both the image recognition result and the line laser recognition result indicating the existence of the wire-type obstacle, the corresponding obstacle avoidance action based on the image recognition result and the line laser recognition result.

In an embodiment, preferably, the processing unit is configured to:
acquire a first accuracy of historical image recognition results and a second accuracy of historical line laser recognition results, separately;
determine a first weight corresponding to the image recognition result based on the first accuracy, and determine a second weight corresponding to the line laser recognition result based on the second accuracy;
determine a comprehensive recognition result based on the image recognition result, the first weight, the line laser recognition, and the second weight; and
perform the corresponding obstacle avoidance action on the wire-type obstacle based on the comprehensive recognition result.

In an embodiment, preferably, the processing unit is further configured to:
acquire, in response to the image recognition result indicating the existence of the wire-type obstacle and the line laser recognition result indicating the inexistence of the wire-type obstacle, or in response to the image recognition result indicating the inexistence of the wire-type obstacle and the line laser recognition result indicating the existence of the wire-type obstacle, a plurality of image recognition results and a plurality of line laser recognition results; and
re-determine whether the wire-type obstacle exists based on the plurality of image recognition results acquired and the plurality of line laser recognition results acquired.

In an embodiment, preferably, the image recognition result includes a position box corresponding to the obstacle, and the apparatus further includes:
a first coordinate determining unit, configured to determine first position coordinate information of the wire-type obstacle based on coordinates of each laser breakpoint in the line laser recognition image;
a pixel point determining unit, configured to perform semantic segmentation on the image recognition result, to determine whether each pixel point in the position box corresponding to the wire-type obstacle belongs to the wire-type obstacle; and
a marking unit, configured to mark the pixel point when the pixel point belongs to the wire-type obstacle, to determine second position coordinate information of the wire-type obstacle;
a second coordinate determining unit, configured to determine final position coordinate information based on the first position coordinate information and the second position coordinate information;
where, the processing unit is further configured to: perform the corresponding obstacle avoidance action based on the final position coordinate information.

In an embodiment, preferably, the apparatus further includes:
a starting/ending point determining unit, configured to determine a starting/ending point of the wire-type obstacle;
where the processing unit is configured to: perform a first obstacle avoidance action on a first region where the starting/ending point of the wire-type obstacle is located, and perform a second obstacle avoidance action on a second region except the first region, where an avoidance distance of the first obstacle avoidance action is greater than an obstacle avoidance distance of the second obstacle avoidance action.

In an embodiment, preferably, the starting/ending point determining unit is configured to:
perform recognition on the image recognition result by using a target image recognition algorithm to determine the starting/ending point of the wire-type obstacle.

In an embodiment, preferably, the starting/ending point determining unit is configured to:
determine an endpoint position of the wire-type obstacle based on the first position coordinate information of the wire-type obstacle; and
determine the endpoint position as the starting/ending point of the wire-type obstacle.

In an embodiment, preferably, the starting/ending point determining unit is configured to:
acquire the plurality of line laser recognition results of the self-propelled device, and determine all corresponding pixel points within a range of the wire-type obstacle based on the plurality of line laser recognition results;
perform clustering processing on all the pixel points to determine a pixel point breakpoint within the range of the wire-type obstacle; and
determine the pixel point breakpoint as the starting/ending point of the wire-type obstacle.

In particular, according to an embodiment of the present disclosure, the processes described above with reference to the flowchart may be implemented as a computer software program. For example, this embodiment of the present disclosure includes a computer program product, which includes a computer program carried on a computer-readable medium, where the computer program includes program code configured to perform the method shown in the flowchart.

It should be noted that the computer-readable medium shown in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or any combination thereof. More specific examples of the computer-readable storage medium may include but are not limited to: an electrical connection with one or more wires, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof. In the present disclosure, the computer-readable storage medium is any tangible medium containing or storing a program for use by or in conjunction with an instruction execution system, apparatus, or device. Moreover, in the present disclosure, the computer-readable signal medium may include data signals propagated in baseband or as part of a carrier wave, bearing computer-readable program code. These propagated data signals may take various forms, including but not limited to electromagnetic signals, optical signals, or any suitable combination thereof. The computer-readable signal medium may also be any computer-readable medium other than the computer-readable storage medium, which sends, propagates, or transmits a program configured for use by or in conjunction with an instruction execution system, apparatus, or device. The program code contained on the computer-readable medium is transmitted using any suitable medium, including but not limited to wireless, wired, optical cables, RF, or any suitable combination thereof.

The flowchart and block diagram in the accompanying drawings illustrate the architecture, functionality, and operations that can be implemented for the system, method, and computer program product according to various embodiments of the present disclosure. In this regard, each block in the flowchart or block diagram may represent a module, program segment, or a portion of code, which includes one or more executable instructions configured to implement specific logical functions. It should also be noted that in some alternate implementations, functions noted in the blocks may occur in different orders than noted in the accompanying drawings. For example, two blocks shown consecutively can actually execute in parallel, or sometimes, in the reverse order, depending on the functionality involved. Also, it should be noted that each block in the block diagram or flowchart, and the combination of blocks in the block diagram or flowchart, can be implemented using a specialized hardware-based system performing the specified functions or operations, or a combination of specialized hardware and computer instructions.

A related unit described in the embodiments of the present disclosure may be implemented in software, or may be implemented in hardware, and the unit described can also be embodied in a processor. The names of units do not constitute a limitation on the units themselves in some cases.

In another aspect, the present application further provides a computer-readable medium. The computer-readable medium may be included in the electronic device described in the above embodiments, or may exist alone without being assembled into the electronic device. The computer-readable medium carries one or more programs which, when executed by the electronic device, cause the electronic device to implement the obstacle avoidance method for a self-propelled device based on a line laser as described in the above embodiments.

For example, the electronic device may implement the following steps as shown in FIG. 3. In step S301, a line laser recognition image of the self-propelled device is acquired. In step S302, whether a wire-type obstacle exists is determined based on the line laser recognition image, to obtain a line laser recognition result. In step S303, a corresponding obstacle avoidance action is performed based on the line laser recognition result.

It should be noted that although several modules or units of the device configured to perform actions are mentioned in the above detailed description, such division is not mandatory. In practice, according to the embodiments of the present disclosure, the features and functions of two or more modules or units described above may be embodied in one module or unit. Conversely, the features and functions of one module or unit described above may be further divided to be embodied by a plurality of modules or units.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, and/or one step may be decomposed into a plurality of steps for execution, or the like.

Based on the description of the foregoing embodiments, a person skilled in the art can easily understand that the example embodiments described herein may be implemented by software, or may be implemented by software in combination with necessary hardware. Therefore, the technical solutions according to the embodiments of the present disclosure may be implemented in the form of a software product. The software product may be stored in a non-volatile storage medium (which may be a CD-ROM, a USB flash drive, a mobile hard disk, or the like) or on a network, and includes several instructions for instructing a computing device (which may be a personal computer, a server, a mobile terminal, a network device, or the like) to perform the method according to the embodiments of the present disclosure.

Other embodiments of the present disclosure are apparent to those skilled in the art from consideration of the specification and practice of the invention disclosed herein. The present application is intended to encompass any variation, use, or adaptation of the present disclosure following the general principles of the present disclosure and including common knowledge or customary technical means in the art undisclosed in the present disclosure. The specification and embodiments are only considered as exemplary, and a true scope and spirit of the present disclosure are indicated in the appended claims.

## Claims

1. An obstacle avoidance method for a self-propelled device based on a line laser, comprising:
acquiring a line laser recognition image of the self-propelled device;
determining whether a wire-type obstacle exists based on the line laser recognition image, to obtain a line laser recognition result; and
performing a corresponding obstacle avoidance action based on the line laser recognition result.

2. The obstacle avoidance method for a self-propelled device according to claim 1, wherein determining whether the wire-type obstacle exists based on the line laser recognition image, to obtain the line laser recognition result comprises:
analyzing the line laser recognition image to determine whether a laser breakpoint exists in each line laser in the line laser recognition image;
determining that the wire-type obstacle exists when the laser breakpoint exists; and
determining that the wire-type obstacle does not exist when the laser breakpoint does not exist.

3. The obstacle avoidance method for a self-propelled device according to claim 2, further comprising:
acquiring an image recognition result; and
performing, in response to both the image recognition result and the line laser recognition result indicating the existence of the wire-type obstacle, the corresponding obstacle avoidance action based on the image recognition result and the line laser recognition result.

4. The obstacle avoidance method for a self-propelled device according to claim 3, wherein performing the corresponding obstacle avoidance action based on the image recognition result and the line laser recognition result comprises:
acquiring a first accuracy of historical image recognition results and a second accuracy of historical line laser recognition results, separately;
determining a first weight corresponding to the image recognition result based on the first accuracy, and determining a second weight corresponding to the line laser recognition result based on the second accuracy;
determining a comprehensive recognition result based on the image recognition result, the first weight, the line laser recognition, and the second weight; and
performing the corresponding obstacle avoidance action on the wire-type obstacle based on the comprehensive recognition result.

5. The obstacle avoidance method for a self-propelled device according to claim 3, further comprising:
acquiring, in response to the image recognition result indicating the existence of the wire-type obstacle and the line laser recognition result indicating the inexistence of the wire-type obstacle, or in response to the image recognition result indicating the inexistence of the wire-type obstacle and the line laser recognition result indicating the existence of the wire-type obstacle, a plurality of image recognition results and a plurality of line laser recognition results; and
re-determining whether the wire-type obstacle exists based on the plurality of image recognition results acquired and the plurality of line laser recognition results acquired.

6. The obstacle avoidance method for a self-propelled device according to claim 3, wherein the image recognition result comprises a position box corresponding to the obstacle, and the method further comprises:
determining first position coordinate information of the wire-type obstacle based on coordinates of each laser breakpoint in the line laser recognition image;
performing semantic segmentation on the image recognition result, to determine whether each pixel point in the position box corresponding to the wire-type obstacle belongs to the wire-type obstacle;
marking the pixel point when the pixel point belongs to the wire-type obstacle, to determine second position coordinate information of the wire-type obstacle;
determining final position coordinate information based on the first position coordinate information and the second position coordinate information; and
performing the corresponding obstacle avoidance action based on the final position coordinate information.

7. The obstacle avoidance method for a self-propelled device according to claim 3, further comprising:
determining a starting/ending point of the wire-type obstacle; and
performing a first obstacle avoidance action on a first region where the starting/ending point of the wire-type obstacle is located, and performing a second obstacle avoidance action on a second region except the first region, wherein an avoidance distance of the first obstacle avoidance action is greater than an obstacle avoidance distance of the second obstacle avoidance action.

8. The obstacle avoidance method for a self-propelled device according to claim 7, wherein determining a starting/ending point of the wire-type obstacle comprises:
performing recognition on the image recognition result by using a target image recognition algorithm to determine the starting/ending point of the wire-type obstacle.

9. The obstacle avoidance method for a self-propelled device according to claim 7, wherein determining a starting/ending point of the wire-type obstacle comprises:
determining an endpoint position of the wire-type obstacle based on the first position coordinate information of the wire-type obstacle; and
determining the endpoint position as the starting/ending point of the wire-type obstacle.

10. The obstacle avoidance method for a self-propelled device according to claim 7, wherein determining a starting/ending point of the wire-type obstacle comprises:
acquiring the plurality of line laser recognition results of the self-propelled device, and determining all corresponding pixel points within a range of the wire-type obstacle based on the plurality of line laser recognition results;
performing clustering processing on all the pixel points to determine a pixel point breakpoint within the range of the wire-type obstacle; and
determining the pixel point breakpoint as the starting/ending point of the wire-type obstacle.

11. An obstacle avoidance apparatus for a self-propelled device based on a line laser, comprising:
an acquiring unit, configured to acquire a line laser recognition image of the self-propelled device;
a result determining unit, configured to determine whether a wire-type obstacle exists based on the line laser recognition image, to obtain a line laser recognition result; and
a processing unit, configured to perform a corresponding obstacle avoidance action based on the line laser recognition result.

12. A self-propelled device, comprising: at least one processor; and a memory communicatively connected to the at least one processor,
wherein the memory stores instructions executable by the at least one processor, and the instructions are configured for performing the method according to any one of claims 1 to 10.

13. A computer-readable storage medium storing computer-executable instructions for performing the method according to any one of claims 1 to 10.
